Europäisches Patentamt

European Patent Office

Office européen des brevets

(11) Veröffentlichungsnummer: **0 523 076 B1**

(12) **EUROPÄISCHE PATENTSCHRIFT**

(45) Veröffentlichungstag der Patentschrift: **14.09.94**

(51) Int. Cl.5: **A23L 3/04**

(21) Anmeldenummer: **91906050.9**

(22) Anmeldetag: **15.03.91**

(86) Internationale Anmeldenummer:
**PCT/EP91/00502**

(87) Internationale Veröffentlichungsnummer:
**WO 91/15128 (17.10.91 91/24)**

(54) **VERFAHREN ZUR ERZIELUNG GLEICHBLEIBENDER PRODUKTOUALITÄT UND -SICHERHEIT IN PASTEURISIERUNGSANLAGEN BEI EINTRITT EINES STAUS UND ANORDNUNG ZUR AUSFÜHRUNG DES VERFAHRENS.**

(30) Priorität: **04.04.90 DE 4010921**

(43) Veröffentlichungstag der Anmeldung:
**20.01.93 Patentblatt 93/03**

(45) Bekanntmachung des Hinweises auf die
Patenterteilung:
**14.09.94 Patentblatt 94/37**

(84) Benannte Vertragsstaaten:
**AT BE CH DE DK ES FR GB GR IT LI LU NL SE**

(56) Entgegenhaltungen:
**EP-A- 0 204 138       EP-A- 0 239 708
WO-A-90/03806        GB-A- 2 182 542
US-A- 4 441 406       US-A- 4 841 457**

(73) Patentinhaber: **OTTO TUCHENHAGEN GmbH &
Co. KG
Am Industriepark 2-10
D-21514 Büchen (DE)**

(72) Erfinder: **BAUDENDISTEL, Gerd
Stammheimer Strasse 7
D-7141 Schwieberdingen (DE)**

(74) Vertreter: **Glaeser, Joachim, Dipl.-Ing. et al
Patentanwälte
DIEHL GLAESER HILTL & PARTNER
Königstrasse 28
D-22767 Hamburg (DE)**

**Beschreibung**

Die Erfindung betrifft ein Verfahren zur Erzielung gleichbleibender Produktqualität und -sicherheit in Pasteurisierungsanlagen bei Eintritt eines Staus, wobei die Pasteurisierungsanlage im Durchlauf betrieben wird und das Produkt dabei verschiedene Temperaturzonen durchläuft, sowie eine Anordnung zur Ausführung des Verfahrens.

Pasteurisierungsanlagen, vorzugsweise sogenannte Tunnelpasteure, sind z.B. in automatisch arbeitenden Abfüllanlagen integriert. Durch die Pasteurisierung werden in Flaschen, Gläsern oder Dosen verpackte Produkte wie Getränke, Obst und Gemüse haltbar gemacht. Dies geschieht durch Berieselung oder Bespritzung der Gebinde und Verschlüsse mittels Wasser bei verschiedenen Temperaturen in mehreren Temperaturzonen. Der Pasteurisierungszone sind Erwärmungszonen vor- und Kühlungszonen nachgeschaltet. Um den Energieverbrauch auf ein Minimum zu senken, findet innerhalb produktbezogener Austauschzonen eine Wärmerückgewinnung statt. Wassermengen auf unterschiedlichem Temperaturniveau werden im Gegenstrom in einem geschlossenen Kreislauf zwischen einander zugeordneten Erwärmungs- und Kühlungszonen hin- und hergepumpt, wodurch der Energieverbrauch der Pasteurisierungsanlage im wesentlichen auf seine Isolationsverluste und auf die Wärmemenge, die die austretenden Gebinde infolge Erwärmung gegenüber ihrer Eintrittstemperatur mitführen, begrenzt wird.

Es liegt auf der Hand, daß der komplizierte Wärmehaushalt eines derartigen Systems empfindlich gestört wird, falls es zu kürzeren oder längeren Stillstandszeiten beim Durchlauf der Gebinde durch die Pasteurisierungsanlage, insbesondere bedingt durch Unterbrechungen im Ablauf der Anlage (Stau), kommt. Darüber hinaus führen derartige Unterbrechungen im Durchlauf zu einer Überpasteurisierung jenes Produktes, das sich gerade in der Pasteurisierungszone befindet, falls nicht besondere Maßnahmen zum Schutz vor Überpasteurisierung ergriffen werden. Diese Maßnahmen bestehen im einfachsten Fall beispielsweise darin, daß in diesen Stillstandszeiten die Temperatur in der Pasteurisierungszone durch Einspritzen von Wasser niedrigerer Temperatur abgesenkt wird ("Notkühlung"), wodurch die Pasteurisierung während des Staus unterbrochen wird. Beim erneuten Anfahren der Pasteurisierungsanlage besteht nun die Gefahr, daß das abgekühlte Produkt nach dem Wiederanfahren, im Anschluß an die Stauauflösung, die zur erforderlichen Produktqualität und -sicherheit notwenige Heißhaltezeit auf dem verbleibenden Transportweg durch die Pasteurisierungszone nicht mehr erreicht. Man spricht in diesem Falle von einer Unterpasteurisierung des zu behandelnden Produktes.

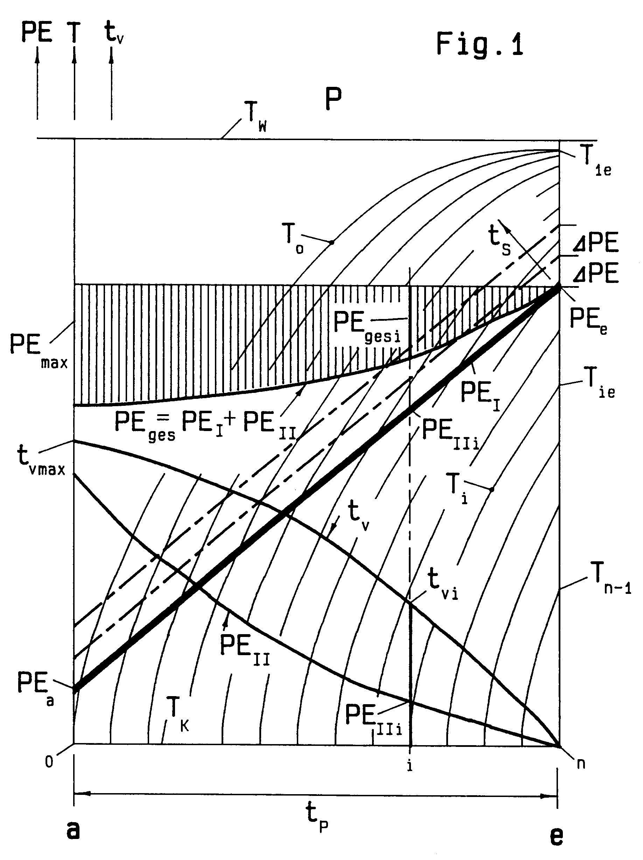

Die Problematik der Pasteurisierung soll kurz an Hand einer graphischen Darstellung in Figur 1 erläutert werden. Die Pasteurisierung hängt hinsichtlich ihrer Auswirkung auf das zu behandelnde Produkt von zwei Einflußgrößen ab, nämlich einerseits von der Höhe der Temperatur T, der das Produkt jeweils ausgesetzt ist, und andererseits von der Einwirkungszeit t dieser Temperatur. Aus der nachfolgend angegebenen Zahlenwertgleichung (1) ersieht man, daß die auf das Produkt übertragenen sogenannten "Pasteurisierungseinheiten" (PE) einerseits linear abhängig sind von der Einwirkungszeit t und andererseits über eine Potenzfunktion abhängig von der Temperatur T:

$$PE = t \, 1,393^{(T-60)} \qquad (1)$$

mit [t] = min und [T] = °C.

Dabei versteht man unter einer "Pasteurisierungseinheit" den Pasteurisiereffekt, der z. B. in Bier erhalten wird, wenn dieses eine Minute lang auf eine Temperatur von 60 °C gehalten wird.

Die Kurve $PE_I$ zeigt den PE-Verlauf eines Produktes innerhalb der Pasteurisierungszone zwischen dem Eintritt in diese Zone (a) und dem Austritt (e), falls der Durchlauf durch diese ungestört und mit gleichbleibender Durchlaufgeschwindigkeit durchgeführt werden kann. Kommt es nun zu einem Stau des Produktes innerhalb der Pasteurisierungsanlage, und werden keine die Temperatur des Produktes in der Pasteurisierungszone absenkenden Maßnahmen ergriffen, ergibt sich eine Überpasteurisierung $\Delta PE$, die linear mit der Stauzeit $t_S$ anwächst (Geradenschar parallel zu $PE_I$).

Wird demgegenüber eine Temperaturabsenkung auf eine Abkühltemperatur $T_K$ vorgenommen, wobei diese Temperatur nicht mehr PE-erhöhend sein soll, so stellt sich nach Wiederanfahren der Pasteurisierungsanlage ein instationäres Temperaturfeld im Produkt innerhalb der Pasteurisierungszone ein, welches durch die Kurvenschar $T_o$ bis $T_{n-1}$ gekennzeichnet ist. Die Kurve $T_o$ kennzeichnet den Temperaturverlauf, den der am Beginn der Pasteurisierungszone angeordnete Bereich beim Durchlauf durch die gesamte Zone erfährt (Anfangstemperatur $T_K$, Endtemperatur $T_{1e}$). Die nachgeordneten Bereiche verlassen die Pasteurisierungszone an ihrem Ende (e) mit der jeweiligen Endtemperatur $T_{ie}$. Aus den angegebenen Temperaturverläufen resultiert nunmehr für den jeweiligen Bereich eine PE-Zunahme bis zum Verlassen der Pasteurisierungszone; diese PE-Zunahme ist durch die Kurve $PE_{II}$ gekennzeichnet. Die Überlagerung von Kurve $PE_I$ und Kurve $PE_{II}$ führt zu einem Kurvenverlauf $PE_{ges}$; der jeweilige Abstand zwischen einem Wert auf der Kurve $PE_{ges}$ und dem erforderlichen Endwert $PE_e$ stellt die fehlenden Pasteurisierungseinheiten (PE) des jeweiligen Pasteurisierungsbereiches nach Eintritt eines Staus, anschließende Abkühlung auf die Abkühltemperatur $T_K$ und Wiederanfahren nach Stauauflösung dar (Unterpasteurisierung).

Das Problem fände eine Lösung für den Fall, daß die Stauzeit $t_S$ größer als die Pasteurisierungszeit $t_P$ ist. In diesem Fall dürften die Einzelbereiche 1 bis n der Pasteurisierungszone nicht, wie dies vorstehend diskutiert wurde, mit Eintritt des Staus unverzüglich auf die Abkühltemperatur $T_K$ abgekühlt werden, sondern die Abkühlung müßte, vom Ende der Pasteurisierungszone (e) ausgehend, verzögert einsetzen. Die erforderliche Verzögerungszeit $t_V$ in Abhängkeit vom jeweiligen Bereich der Pasteurisierungszone zeigt der Kurvenverlauf $t_V$.

Die vorstehend vorgeschlagene Lösung ist nur für den Fall gültig, daß die Stauzeit $t_S$ größer ist als die maximale Verzögerungszeit $t_{Vmax}$, da anderenfalls die nicht abgekühlten Gebinde eine Behandlungszeit erfahren, die sich aus der Pasteurisierungszeit $t_P$ und der Stauzeit $t_S$ ergibt (Überpasteurisierung).

Da die Zeitdauer eines Staus zum Zeitpunkt seines Eintritts im Regelfalle nicht vorhersehbar ist, stellt die vorgeschlagene Lösung, die man als eine intelligentere "modifizierte Notkühlung" bezeichnen könnte, mehr eine theoretische und keine praktisch brauchbare Lösung dar, um eine gleichbleibende Produktqualität und Produktsicherheit unter allen denkbaren Betriebsbedingungen sicherzustellen. Die Diskussion dieser allenfalls begrenzt anwendbaren Lösung sollte die Komplexität des anstehenden Problems verdeutlichen.

Aus der DE 36 37 661 A1 sind ein Verfahren und eine Vorrichtung zum Pasteurisieren von Lebensmittelprodukten in Behältern bekannt, die auf dem vorstehend als "modifizierte Notkühlung" bezeichneten Pasteurisierungsverfahren fußen und dieses weiterentwickeln und gerätetechnisch ausgestalten. Ausweislich der Beschreibung stellen sich das bekannte Verfahren und die Vorrichtung die Aufgabe, die mit dem Eintritt eines Staus und mit Flaschenfehlstellungen verbundenen Nachteile zu vermeiden und dabei mit variabler, an die Erfordernisse angepaßter Geschwindigkeit zu arbeiten. Die Korrektur von Flaschenfehlstellungen innerhalb der Pasteurisierungsanlage mit dem erklärtem Ziel, schädliche Einflüsse auf den Energieverbrauch zu unterbinden, erfordert die Realisierung einer variablen Durchlaufgeschwindigkeit. Ob allerdings durch diese Maßnahme Energie eingespart wird, ist äußerst fragwürdig. Es ist zwar richtig, daß bei Flaschenmangel am Einlauf Kaltwasser zur Abkühlung der austretenden Flaschen zugeführt werden muß und daß, wenn Flaschen bei der Abkühlung am Austritt fehlen, den eintretenden Flaschen zusätzlich Wärme zuzuführen ist. Wird jedoch die Durchlaufgeschwindigkeit der Pasteurisierungsanlage, wie dies bei Flaschenmangel am Eintritt erforderlich ist, verringert, dann werden die minimalen und maximalen Pasteurisierungseinheiten ($PE_{min}$, $PE_{max}$) vor Ende der Pasteurisierungszone erreicht, und es wird bereits dort die Rückkühlung mit dem notwendigen Kälteaufwand erforderlich.

Darüber hinaus verändern sich bei gleichbleibender Behandlungstemperatur und infolge verringerter Durchlaufgeschwindigkeit bei demzufolge längerer Behandlungszeit die Auslauftemperaturen der Flaschen aus den einzelnen Zonen, so daß die Pasteurisierungstemperatur früher erreicht wird. Die bei konstanter Durchlaufgeschwindigkeit und Behandlungstemperatur erreichbare konstante Temperaturverteilung im Gebinde bzw. Produkt wird durch die Anwendung variabler Durchlaufgeschwindigkeit gründlich durcheinander gebracht bzw. wenigstens empfindlich gestört.

Damit die im Bedarfsfalle mit variabler Durchlaufgeschwindigkeit betriebene Pasteurisierungsanlage zu keiner unkontrollierten Überpasteurisierung führt, ist vorgesehen, daß wenigstens ein Teil der Anordnung, die aus der Vorpasteurisierzone und der Pasteurisierzone besteht, in regelbare Elementarzonen unterteilt wird, in deren jeder die Anzahl von PE berrechnet wird, die wenigstens einem Referenzbehälter erteilt wird, der wenigstens einen Teil der Elementarzone durchläuft und daß die Unterbrechung des Pasteurisierens in der Elementarzone ausgelöst wird, wenn dieser Referenzbehälter oder wenigstens einer der Referenz behälter aus einer Vielzahl von Referenzbehältern eine Anzahl PE aufgenommen hat, die einem vorgegebenen Maximalwert $PE_{max}$ entspricht und wenn alle anderen gegebenenfalls vorhandenen Referenzbehälter eine Anzahl PE aufgenommen haben, die einem vorgegebenen Minimalwert $PE_{min}$ entsprechen.

Der vorgeschlagene meß- und verfahrenstechnische Aufwand zur Lösung der gestellten Aufgabe ist außerordentlich hoch. Die Beobachtung einer Vielzahl von Referenzbehältern und die permanente Berechnung der Anzahl der von ihnen jeweils aufgenommenen Pasteurisierungseinheiten eröffnet die Möglichkeit, eine Überpasteurisierung des Produktes im Falle eines Staus zu verhindern, wenn jene Gebinde innerhalb einer regelbaren Elementarzone abgekühlt werden, für die die Auswertung der zugeordneten Referenzbehälter das Erreichen eines vorgebenen PE-Bereichs ergeben hat.

Das bekannte Verfahren gibt jedoch keine Hinweise, wie im Falle eines länger andauernden Staus den besonderen Problemen in der mit oberhalb der Pasteurisierungstemperatur betriebenen Vorpasteurisierungszone (im folgenden mit Überhitzungszone bezeichnet) begegnet werden kann und welche planmäßigen Maßnahmen nach dem Wiederanfahren der Pasteurisierungsanlage im Anschluß an die Stauauflösung in den relevanten Bereichen der Überhitzungs- und Pasteurisierungszone erforderlich sind.

In der Zeitschrift Getränketechnik, 6. Jahrgang, 2/90, Seiten 16 und 17, ist schließlich ein computergesteuertes PE-Regelsystem für Pasteurisierungsanlagen beschrieben, welches allerdings nicht auf der traditionellen Erhitzungs-Pasteurisierzonen-Struktur basiert, sondern auf zwei oder mehreren Heißzonen, in denen die Temperaturen laufend modifiziert werden, um die PE-Aufnahme zu optimieren. Dieses System erfordert darüber hinaus einerseits eine variable Geschwindigkeit des Haupttransporteurs, andererseits wird eingeräumt, daß beim Anhalten der Pasteurisierungsanlage, wobei Stillstand bei diesem System eine Pasteurisierung mit der Geschwindigkeit null darstellt, eine Kühlung mittels Zufuhr von Kühlwasser nur dann vermieden werden kann, wenn Pasteurisierungs-Toleranzen zwischen 15 PE und bis zu 40 PE für beispielsweise Bier in Flaschen akzeptiert werden können. Diese Angabe ist in Relation zu einem Pasteurisiereffekt mit einem Sollwert $PE_{soll}$ = 24 bis 25 zu sehen, der sich einstellt, wenn eine 0,5 Liter Euro-Flasche Bier bei einer Pasteurisierungstemperatur $T_p$ = 62 °C eine Pasteurisierungszeit $t_p$ = 10 min erfährt.

Selbst wenn es mit der bekannten Anordnung gelingt, den Einsatz von Kühlwasser bei der PE-Regelung dadurch zu minimieren, daß Wärmeaustauscher benutzt werden, um die heißen Produkte mit Hilfe von kalten Produkten abzukühlen, bleibt das grundsätzliche Problem bestehen, daß bei Eintritt eines Staus eine Pasteurisierung in sehr engen Toleranzgrenzen nicht möglich ist. Unter engen Toleranzgrenzen sollen solche Werte angesehen werden, die etwa bei der Hälfte bis bei einem Drittel der vorstehend angegebenen liegen sollen.

Der Erfindung liegt die Aufgabe zugrunde, ein Verfahren und eine Anordnung zu seiner Ausführung zu schaffen, mit denen bei Pasteurisierungsanlagen der einleitend gekennzeichneten Gattung (Erhitzungs-Pasteurisierzonen-Struktur) bei Eintritt eines beliebig langen Staus eine Über- aber auch eine Unterpasteurisierung sicher verhindert wird und eine Pasteurisierung in sehr engen Toleranzgrenzen (PE-Toleranzen) möglich ist.

Die verfahrenstechnische Lösung der gestellten Aufgabe wird durch Anwendung der Kennzeichenmerkmale des Anspruchs 1 erreicht. Vorteilhafte Ausgestaltungen des Verfahrens sind Gegenstand der Unteransprüche 2 bis 6. Eine Anordnung zur Ausführung des Verfahrens wird durch die kennzeichnenden Merkmale des Anspruchs 7 beschrieben, während Weiterbildungen der Anordnung Gegenstand der Ansprüche 8 bis 11 sind.

Die Erfindung entwickelt eine Pasteurisierungsanlage weiter, die mit einer den planmäßigen Pasteurisierungserfordernissen angepaßten konstanten Durchlaufgesschwindigkeit betrieben wird, und sie geht von dem Grundgedanken aus, daß die Einhaltung sehr enger PE-Toleranzen nur dann möglich ist, wenn ein Abkühlen des Produkts im Anschluß an den Eintritt eines Staus und das Wiederanfahren und Hochheizen nach der Stauauflösung vermieden wird. Ein Hochheizen des Produktes nach Wiederanfahren der Anlage birgt das grundsätzlich nicht zu lösende Problem in sich, daß auch Temperaturen unterhalb der Pasteurisierungstemperatur $T_P$ einen PE-erhöhenden Beitrag zur erforderlichen PE-Zunahme leisten. Die erfindungsgemäß vorgeschlagene Lösung verzichtet bewußt auf die Anwendung einer variablen Durchlaufgeschwindigkeit für das Produkt, und zwar im Hinblick auf die eingangs erörterten nachteiligen Auswirkungen einer solchen Maßnahme und sie stellt sicher, daß nur solche Pasteurisierungs- und Stillstandszeiten einen Beitrag zur erforderlichen PE-Zunahme leisten, bei denen eine Heißhaltung des Produkts bei der Pasteurisierungstemperatur $T_P$ vorliegt. Die Pasteurisierungszone ist eine Heißhaltezone, in der lediglich die Wärmeverluste der infragekommenden Anordnung zur Umgebung hin kompensiert werden müssen. Bei Eintritt eines Staus ist daher auch keine Überhitzung des Produkts gegeben. Die durch einen Stau bedingte Stillstandszeit wirkt sich daher hinsichtlich des Produktes aus wie eine Pasteurisierung unter Normalbedingungen bei ungestörtem Durchlauf durch die Pasteurisierungszone. Ausgehend von dieser Erkenntnis läßt die vorgeschlagene Lösung nach Eintritt eines Staus zunächst eine weitere Pasteurisierung in all jenen Bereichen der Pasteurisierungszone zu, die noch nicht die erforderliche Heißhaltezeit (Pasteurisierungszeit $t_P$) erfahren haben.

Die Pasteurisierung in den einzelnen Bereichen wird nach Ablauf der vorgeschriebenen Pasteurisierungszeit durch Zuschaltung eines Kühlungseingriffs beendet, wobei das Produkt dabei auf eine Temperatur abgekühlt wird, die keine Zunahme der dem Produkt in diesem Bereich bis zu diesem Zeitpunkt verabreichten Pasteurisierungseinheiten (PE) mehr bewirkt oder nur eine geringe, innerhalb der geforderten PE-Tolerenz zulässige. Der Kühlungseingriff beginnt, gemäß dem Vorschlag, am Ende der Pasteurisierungszone und schreitet zu ihrem Anfang mit einer Geschwindigkeit fort, die dem Betrag der Durchlaufgeschwindigkeit des Produktes entspricht. Gleichzeitig wird mit dem fortschreitenden Kühlungseingriff die Heißhaltung in den abzukühlenden Bereichen abgeschaltet. Während der Kühlungseingriff mit Eintritt des Staus erfolgt, determiniert die jeweilige Stauzeit $t_S$ einerseits die Endlage des Kühlungseingriffs und andererseits seine Einwirkungsdauer in dieser Endlage, wobei sich die Einwirkungsdauer jeweils aus der Differenz zwischen der Pasteurisierungszeit $t_P$ und der Stauzeit $t_S$ bestimmt. Erst wenn der vorstehend dargestellte Kühlungseingriff in seiner durch die Stauauflösung bestimmten Endlage vollständig abgelaufen ist, wird in den abgekühlten Bereichen die Heißhaltung mit der Durchlaufgeschwindigkeit wieder zugeschaltet, wodurch die vom Kühlungseingriff nicht mehr erfaßten Bereiche einer planmäßigen Pasteurisierung unterworfen werden können.

Die Dauer der Abkühlung, d.h, die Zeitspanne, in der das Produkt von der Pasteurisierungstemperatur $T_P$ muß auf eine Temperatur $T_K$ abgekühlt werden muß, bei der keine PE-erhöhenden oder die PE-Toleranz überschreitenden Pasteurisierungseffekte eintreten, richtet sich nach der geforderten PE-Toleranz und der zulässigen Kaltwassertemperatur, die aufgrund unterschiedlicher Temperaturstabilität der vorliegenden Gebinde nicht beliebig herabgesetzt werden kann. Zur möglichst genauen Temperaturhaltung bleibt die Heißhaltung in all jenen Bereichen in Betrieb, die vom Kühlungseingriff noch nicht erfaßt wurden.

Während die kontinuierliche Fortbewegung des Kühlungseingriffs die Einhaltung sehr enger PE-Toleranzen erlaubt, ist auch, gemäß einer weiteren Ausgestaltung des erfindungsgemäßen Verfahrens, eine schrittweise Fortbewegung des Kühlungseingriffs durchführbar. Dabei richtet sich die Schrittzeit $\Delta t$ und die mit ihr verknüpfte Einwirkungsbreite $\Delta S$ nach der zulässigen PE-Toleranz gemäß der nachfolgenden Gleichung (2) bzw. (3):

$$\Delta t = t_p \Delta PE_{Tol}/(PE_e - PE_a) \qquad (2)$$

$$\Delta S = v \Delta t = L \Delta t / t_p \qquad (3),$$

wobei die Differenz $PE_e - PE_a$ die PE-Zunahme in der Pasteurisierungszone, v die Durchlaufgeschwindigkeit durch diese Zone und L die Länge dieser Zone bedeuten.

Jede bei der kontinuierlichen Verfahrensweise vorgeschlagene Maßnahme erfolgt nunmehr bei der schrittweisen Verfahrensweise sozusagen in Form von in dieser Schrittzeit $\Delta t$ gequantelten Zeitschritten, wobei der Kühlungseingriff um die einfache Schrittzeit $\Delta t$ nach Staubeginn einsetzt und sich in fortschreitender Abfolge der Schrittzeit $\Delta t$ und nach Maßgabe der in ihr gequantelten Stauzeit $t_S$ zum Anfang der Pasteurisierungszone hin wandert. Die Einwirkungsdauer $t_{KD}$ des Kühlungseingriffs wird gleichfalls schrittweise reduziert.

Die schrittweise Lösung kommt der Ausgestaltung der bekannten Pasteurisierungsanlagen insofern entgegen, als feste Sprührohre oder schwenkbare Düsensysteme oder Berieselungseinrichtungen vorgesehen sind, die bereichsweise längs der Zonen zu- und abschaltbar sind. Die Anzahl der erforderlichen Zonen n, die sowohl mit bereichsweise zu- und abschaltbaren Spritzsystemen für die Heißhaltung und für den Kühlungseingriff auszustatten sind, bestimmt sich nach Gleichung (4):

$$n = t_p/\Delta t = (PE_e - PE_a)/\Delta PE_{Tol} \qquad (4)$$

Der vorgeschlagene Erfindungsgedanke ist auch in vorteilhafter Weise auf die PE-erhöhenden Temperaturbereiche der der Pasteurisierungszone P vorgeschalteten Überhitzungszone Ü anzuwenden, wenn, wie dies eine weitere Ausgestaltung des Verfahrens vorsieht, bei Erreichen der Pasteurisierungstemperatur $T_P$ die Überhitzung in den jeweiligen Bereichen, beginnend am Anfang der Pasteurisierungszone und in die Überhitzungszone hinein fortschreitend, abgeschaltet wird. Dabei sind zwei Fälle zu unterscheiden, nämlich jener, bei dem die Stauzeit $t_S$ gleich oder kleiner ist als die Pasteurisierungszeit $t_P$ und weiterhin jener, bei dem die Stauzeit $t_S$ die Pasteurisierungszeit $t_P$ übersteigt. Im letztgenannten Falle wandert der Kühlungseingriff, sinngemäß wie für die Pasteurisierungszone P bereits beschrieben, in den PE-erhöhenden Bereich der Überhitzungszone hinein und bewirkt dort den notwendigen Kühlungseingriff. Im erstgenannten Fall ($t_S < t_P$) ist dafür Sorge zu tragen, daß die für die Erhöhung der PE-Einheiten relevanten Bereiche nach Eintritt in den sich in der Pasteurisierungszone in seiner Endlage befindenden Kühlungseingriff dort abgekühlt werden, und daß weiterhin die Überhitzung um eine Zeitspanne nach Auflösung des Staus mit der Durchlaufgeschwindigkeit wieder zugeschaltet wird, damit das außerhalb der PE-relevanten Temperaturbereiche befindliche Produkt einer planmäßigen Pasteurisierung unterliegt. Die vorgenannte Zeitspanne bemißt sich aus der um die Staulänge $t^S$ verminderten Durchlaufzeit durch die gesamte Überhitzungszone.

Darüber hinaus schlägt eine weitere vorteilhafte Ausgestaltung des Verfahrens hinsichtlich der PE-relevanten Bereiche der Überhitzungszone vor, daß die Überhitzung in Bereichen der Überhitzungszone unterhalb einer Grenztemperatur $T^*$, die keine bzw. eine geringe tolerierbare Aufnahme von Pasteurisierungseinheiten des Produktes bewirkt, sofort mit Eintritt des Staus abgeschaltet wird, und daß die Überhitzung in den übrigen Bereichen bei Erreichen der Pasteurisierungstemperatur $T_P$, beginnend am Anfang der Pasteurisierungszone und in die Überhitzungszone hinein fortschreitend, abgeschaltet wird. Die weiteren verfahrenstechnischen Schritte entsprechen jenen der bereits vor stehend dargestellten Verfahrensweise, jedoch mit dem Unterschied, daß bei einer Stauzeit, die kleiner als die Pasteurisierungszeit ist, die Überhitzung nach Auflösung des Staus mit der Durchlaufgeschwindigkeit wieder zugeschaltet wird.

Um einen möglichst sparsamen Umgang mit Energie sicherzustellen, schlägt eine weitere Ausgestaltung des Verfahrens vor, die mit dem Kühlungseingriff anfallenden Kaltwassermengen von den in den Bereichen der Heißhaltung anfallenden Warmwassermengen getrennt zu erfassen.

Eine besonders vorteilhafte Ausgestaltung des Verfahrens sieht in diesem Zusammenhang vor, daß die zur Heißhaltung bestimmten Wassermengen bereichsweise erfaßt und im Kreislauf geführt werden, daß die Heißhaltung, Bereich für Bereich, in dem der Kühlungseingriff erfolgt, abgeschaltet und die in Frage kommende Wassermenge aus dem jeweiligen Bereich herausgenommen und gestapelt wird. Die bereichsweise Herausnahme der Heißhaltung beeinträchtigt die Pasteurisierungstemperatur $T_P$ in diesem Bereich praktisch so gut wie nicht, so daß die betreffende Wassermenge aus dem Kreislauf herausgenommen werden kann, und eine Vermischung mit dem in diesem Bereich zugeführten Kaltwasser daher erst gar nicht eintreten kann. Da die notwendigen Bereiche innerhalb der Pasteurisierungszone ohnehin vorhanden und jeweils mit einer Umwälzpumpe für die Kreislaufführung der Wassermenge ausgestattet sind, ergibt sich zur gegenständlichen Realisierung des vorgeschlagenen Verfahrens lediglich die Notwendigkeit, einen Vorratstank für die Stapelung der Wassermengen aller Bereiche vorzusehen, auf den die Umwälzpumpen jeweils umschaltbar sein müssen.

Die erfindungsgemäße Anordnung basiert auf der Erhitzungs-Pasteurisierzonen-Struktur, wobei in der Pasteurisierungs- und in der Überhitzungszone zur Heißhaltung bzw. Überhitzung feste Sprührohre oder schwenkbare Düsensysteme oder Berieselungseinrichtungen vorgesehen sind, die bereichsweise längs der Zonen zu- und abschaltbar sind. Erfindungsgemäß wird nun ein Sprühsystem vorgeschlagen, welches innerhalb der Pasteurisierungszone P und der Überhitzungszone Ü kontinuierlich bzw. schrittweise verfahrbar ist, wobei bei der schrittweisen Fortbewegung seine Einwirkungsbreite $\Delta S$, in Bewegungsrichtung gesehen, der sich aus der zulässigen PE-Toleranz ergebenden bzw. durch die Schrittzeit $\Delta t$ und die Durchlaufgeschwindigkeit v festgelegten Schrittweite $v \cdot \Delta t$ entspricht. Eine weitere Ausgestaltung der Anordnung sieht die Zuführung von Kaltwasser über fest angeordnete Sprührohre oder schwenkbare Düsensysteme vor, die längs der Zonen getrennt voneinander zu- und abschaltbar sind. Dadurch läßt sich einerseits die Fortbewegung des Kühlungseingriffs quasikontinuierlich durchführen, andererseits ist jedoch auch eine abschnittsweise, lückenlose, in fortschreitender Abfolge und nach Maßgabe der Schrittzeit $\Delta t$ erfolgende Fortbewegung realisierbar. Die aus der Schrittzeit $\Delta t$ resultierende Einwirkungsbreite $\Delta S$ (vergl. Gleichungen (2) und (3)) gewährleistet die lückenlose Überdeckung aller Bereiche der Pasteurisierungs- bzw. Überhitzungszone.

Damit das beim Kühlungseingriff anfallende Kaltwasser weitestgehend getrennt von dem in den Heißhaltezonen der Pasteurisierungszone P anfallenden Warmwasser erfaßt werden kann, sieht eine weitere Ausgestaltung der Anordnung mehrerer voneinander getrennte Auffangzonen innerhalb der Pasteurisierungszone P vor, aus denen jeweils über eine Umwälzpumpe das gesammelte Spritzwasser auf dem Weg über einen Wärmetauscher den zugeordneten Spritzrohren bzw. schwenkbaren Düsensystemen im Kreislauf zugeführt wird. Werden beispielsweise drei Auffangzonen vorgesehen, dann vermischt sich lediglich in einer dieser Zonen kaltes mit warmem Wasser, während in den anderen beiden Zonen der Energiehaushalt unbeeinträchtigt bleibt.

Eine weitere Ausgestaltung, mit der gleichfalls eine getrennte Erfassung von kaltem und warmem Wasser erreicht werden kann, ist durch ein Auffangsystem gekennzeichnet, welches synchron zum Fortschritt des Kühlungseingriffs unter diesem im Bereich unterhalb der Behältnisse längs der Pasteurisierungszone verfahrbar ist.

Das erfindungsgemäße Verfahren und die Anordnungen zu seiner Ausführung werden anhand von Ausführungsbeispielen nachfolgend erläutert.

Es zeigen neben Figur 1, die der einleitenden Darstellung des vorliegenden Problems diente,

Figur 2      in schematischer Darstellung eine Draufsicht auf eine Pasteurisierungsanlage mit einer angeschlossenen Zulauf- und einer Ablauf-Transportanlage;

Figur 3      einen qualitativen Temperaturverlauf in Längsrichtung der Pasteurisierungsanlage;

Figur 3a      einen sich aus Figur 3 ergebenden qualitativen PE-Verlauf, resultierend aus der Überhitzungs-, der Pasteurisierungs- und der nachgeschalteten Abkühlungszone;

Figur 4      eine schematische Darstellung des erfindungsgemäßen Verfahrens bei schrittweiser Fortbewegung des den Kühlungseingriffs innerhalb der Pasteurisierungszone;

Figur 5      eine weitere Ausgestaltung des erfindungsgemäßen Verfahrens mit einer verfahrbaren Spritzeinrichtung;

Figur 5a    ein der Anordnung gemäß Figur 5 zugeordnetes verfahrbares Auffangsystem;

Figur 5b    drei der Anordnung gemäß Figur 5 zugeordnete Auffangzonen für das in den einzelnen Bereichen anfallende Spritzwasser;

Figur 6    in schematischer Darstellung die Anwendung des erfindungsgemäßen Verfahrens auf den PE-erhöhenden Temperaturbereich in der der Pasteurisierungszone vorgeschalteten Überhitzungszone und

Figur 6a    die Fortsetzung der fest angeordneten bzw. verfahrbaren Spritzanordnung über den Bereich der Pasteurisierungszone hinaus und bis in die nicht mehr PE-erhöhenden Temperaturbereiche der Überhitzungszone hinein.

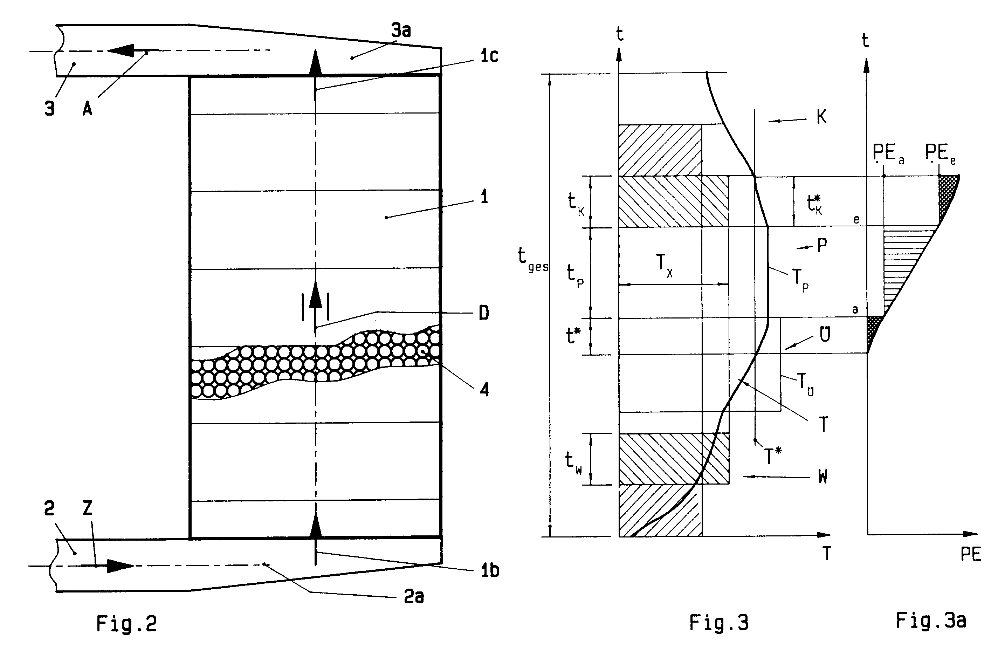

Aufbau und Wirkungsweise einer Pasteurisierungsanlage der einleitende gekennzeichneten Gattung seien kurz anhand der Figuren 2 bis 3a erläutert. Die Pasteurisierungsanlage 1 wird in ihrer Durchlaufrichtung D von Behältnissen 4, vorzugsweise Flaschen, Gläsern oder Dosen, durchlaufen, welche über eine Zulauf-Transportanlage 2, von der nur der an die Pasteurisierungsanlage 1 angeschlossene Teil dargestellt ist, herangeführt werden. Eine Zulauf- und Verteileinrichtung 2a sorgt dafür, daß die Behältnisse 4 über die gesamte Eintrittsbreite des Pasteurisierungstunnels gleichmäßig verteilt in letzteren in Richtung seines Eintritts 1b gelangen. An seinem Austritt 1c werden die Behältnisse 4 über eine Ablauf- und Sammeleinrichtung 3a in eine Ablauf-Transportanlage 3 überführt. Der Zulauf zur Pasteurisierungsanlage 1 trägt die Bezeichnung Z und der Ablauf die Bezeichnung A. Im Falle einer Unterbrechung im Ablauf A kommt das gesamte Transportsystem der Pasteurisierungsanlage 1 zum Stillstand.

Figur 3 zeigt eine stationäre Temperaturverteilung T in Abhängigkeit von der Längsrichtung der Pasteurisierungsanlage 1, wobei anstelle der Weglänge die äqivalente Durchlaufzeit t, die aufgrund einer konstanten Durchlaufgeschwindigkeit v der Weglänge proportional ist, aufgetragen ist. Man erkennt im mittleren Bereich des Diagrammes den Pasteurisierungsbereich P mit der konstanten Pasteurisierungstemperatur $T_P$. Diesem Bereich ist eine Zone der Erwärmung, die auch die an die Pasteurisierungszone P unmittelbar angrenzende Übererhitzungszone Ü umfaßt, vor- und eine Zone der Kühlung K nachgeordnet. Die Pasteurisierungsdauer und die gesamte Durchlaufzeit wurden mit $t_P$ bzw. $t_{ges}$ gekennzeichnet.

Die schraffierten Flächen in der Zone der Erwärmung W und der Kühlung K sollen einen Hinweis auf die Wärmerückgewinnung in den produktbezogenen Austauschzonen geben. So wird beispielsweise in der Zone der Kühlung K mit Wasser der Temperatur $T_X$ über eine Zeitdauer $t_K$ gekühlt und anschließend wird mittels der den Behältnissen 4 entzogenen Wärmemenge, die durch das schraffierte Rechteck mit den Abmessungen $T_X$ und $t_K$ repräsentiert wird, eine Erwärmung der Behältnisse 4 in der Zone der Erwärmung W durchgeführt. Diese Wärmemenge wird nunmehr durch das schraffierte Rechteck mit den Abmessungen $T_X$ und $t_W$ dargestellt. Analog zu diesem beispielhaft dargestellten Wärmeaustausch gibt es eine Reihe weiterer produktbezogener Austauschzonen, in denen die vorstehend beschriebene Wärmerückgewinnung in entsprechender Weise durchgeführt wird. In der Überhitzungszone Ü wird mit einer etwas oberhalb der Pasteurisierungstemperatur $T_P$ liegenden Überhitzungstemperatur $T_Ü$ gearbeitet.

Figur 3a zeigt qualitativ die Zunahme der Pasteurisierungseinheiten (PE) in Abhängigkeit von der Durchlaufzeit t bzw. von dem Durchlaufweg. Der Pasteurisierungszone P sind die Anfangswerte $PE_a$ und der Endwert $PE_e$ zugeordnet, wobei sich die Zunahme zwischen diesen beiden Grenzwerten aufgrund der Gleichung (1) linear gestaltet. Weiterhin ist zu erkennen, daß es im Bereich der Überhitzungszone Ü und der Kühlungszone K PE-erhöhende Temperaturbereiche oberhalb einer relevanten Grenztemperatur T* gibt. Die PE-Zunahme in diesen Bereichen ist zwar relativ gering; sie ist jedoch im Hinblick auf sehr enge PE-Toleranzen, die eine gleichbleibende Produktqualität und Produktsicherheit gewährleisten, meist nicht zu vernachlässigen.

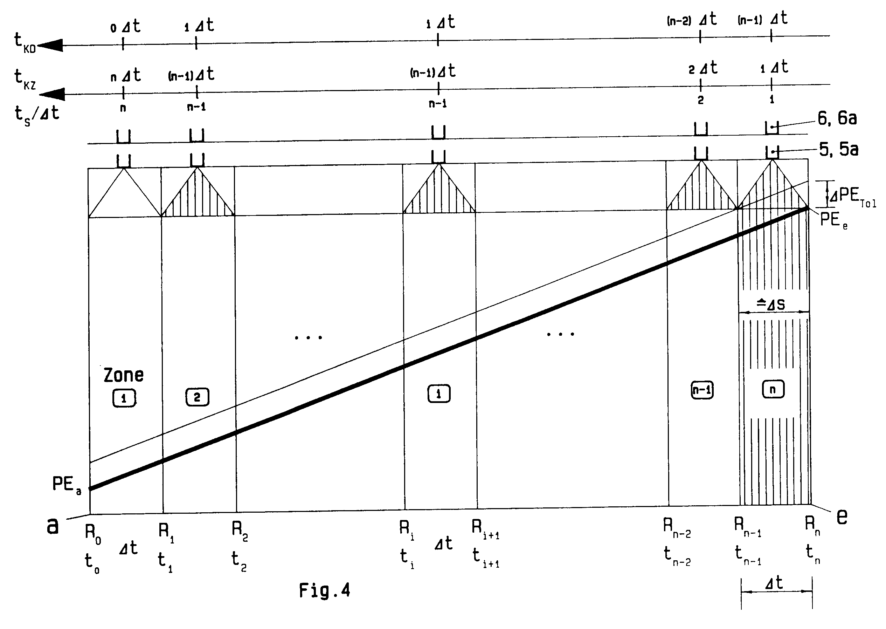

Figur 4 zeigt in schematischer Darstellung die schrittweise Realisierung des erfindungsgemäßen Verfahrens. Zwischen den Stellen a und e befindet sich die Pasteurisierungszone P mit ihrer nicht bezeichneten Länge L, in der gemäß Gleichung (1) die Pasteurisierungseinheit von dem Anfangswert $PE_a$ bis auf den Endwert $PE_e$ linear ansteigt.

Aufgrund einer vorgegebenen zulässigen PE-Toleranz $\Delta PE_{Tol}$ ergeben sich eine Schrittzeit $\Delta t$ und eine daraus resultierende Einwirkungsbreite $\Delta S$ des Kühlungseingriff. Damit unterteilt sich die Pasteurisierungszone gemäß Gleichung (4) in 1 bis n gleichbreite Teilzonen, deren Ränder die Bezeichnungen $R_o$ bis $R_n$ tragen. Die einzelnen Teilzonen 1 bis n verfügen in ihrer Mitte jeweils über fest angeordnete Sprührohre oder schwenkbare Düsensysteme 5 bzw. 5a für die Ausbringung von Kaltwasser und in gleicher Anordnung über fest angeordnete Sprührohre oder schwenkbare Düsensysteme 6,6a für die Ausbringung von Heißwasser. Im oberen Teil des Schemas sind zwei Zeitleisten dargestellt, wobei die mit $t_{KZ}$ gekennzeichnete Leiste die Zuschaltung der Kühlung nach Staubeginn in der jeweiligen Zone 1 bis n angibt und die mit $t_{KD}$ gekennzeichnete Leiste Angaben über die Dauer der Kühlung nach Stauauflösung für die jeweilige Zone 1 bis n enthält. Die Angaben auf den Zeitleisten sind jeweils als ganzzahlige Vielfache der Schrittzeit $\Delta t$

angegeben. Die Zeitdauer $t_{KZ}$ kennzeichnet gleichzeitig auch die Stauzeit $t_S$ (Stauzeit auf die Schrittzeit normiert: $t_S/\Delta t$). Mit den Rändern $R_o$ bis $R_n$ korrespondieren Durchlaufzeiten t, wobei die Zeit $t_n$ am Ende der Pasteurisierungszone der Pasteurisierungszeit $t_P$ entspricht.

In Verbindung mit der nachfolgenden Tabelle, in der sich in Abhängigkeit von der auf die Schrittzeit $\Delta t$ normierten Stauzeit das erfindungsgemäße Verfahren auch in seiner Zuordnung zu den einzelnen Teilzonen 1 bis n in anderer Form dokumentiert, sollen drei unterschiedlich lange Staulangen erörtert werden. Setzt man der Einfachheit halber die Schrittzeit $\Delta t$ auf eine Minute fest, dann soll nachfolgend das Verfahren für eine Staulange von einer Minute, i = 8 Minuten und 12 Minuten erörtert werden, wobei die Pasteurisierungszeit $t_P$ = $t_n$ = 13 Minuten betragen soll.

| Stauzeit | | | | | | | | | | | | | | Dauer der Kühlung nach Stauauflösung | |
|---|---|---|---|---|---|---|---|---|---|---|---|---|---|---|---|
| | | | | | | | | | | | | | Zuschaltung der Kühlung nach Staubeginn | | |
| | ZONE | | | | | | | | | | | | | | |
| $t_S/\Delta t$ | 1 | 2 | 3 | 4 | 5 | 6 | 7 | 8 | 9 | 10 | 11 | 12 | 13 | $t_{KZ}/\Delta t$ | $t_{KD}/\Delta t$ |
| 1 | H | H | H | H | H | H | H | H | H | H | H | H | K | 1 | 12 |
| 2 | H | H | H | H | H | H | H | H | H | H | H | K | – | 2 | 11 |
| 3 | H | H | H | H | H | H | H | H | H | H | K | – | – | 3 | 10 |
| 4 | H | H | H | H | H | H | H | H | H | K | – | – | – | 4 | 9 |
| 5 | H | H | H | H | H | H | H | H | K | – | – | – | – | 5 | 8 |
| 6 | H | H | H | H | H | H | H | K | – | – | – | – | – | 6 | 7 |
| 7 | H | H | H | H | H | H | K | – | – | – | – | – | – | 7 | 6 |
| 8 = i | H | H | H | H | H | K | – | – | – | – | – | – | – | 8 | 5 |
| 9 | H | H | H | H | K | – | – | – | – | – | – | – | – | 9 | 4 |
| 10 | H | H | H | K | – | – | – | – | – | – | – | – | – | 10 | 3 |
| 11 | H | H | K | – | – | – | – | – | – | – | – | – | – | 11 | 2 |
| 12 | H | K | – | – | – | – | – | – | – | – | – | – | – | 12 | 1 |
| 13 | AK | – | – | – | – | – | – | – | – | – | – | – | – | 13 | 0 |

**Staulänge 1 min** : Die Zuschaltung der Kühlung nach Staubeginn erfolgt mit $t_{KZ}$ = 1 min in der Zone n = 13. Die Zonen 1 bis 12 werden im Hinblick auf eine möglichst genaue Temperaturhaltung durch Ausbringung von heißem Wasser auf der Pasteurisierungstemperatur $T_P$ gehalten.

Die Dauer der Kühlung nach Stauauflösung in der Zone n = 13 beträgt $t_{KD}$ = 12 min, so daß beispielsweise das Produkt der Zone 2, bei seinem Durchlauf durch die Zone n = 13 noch eine Abkühlung erfährt. Lediglich die Zone 1, die mit Eintritt des Staus im Mittel bereits eine Minute pasteurisiert wurde, wird von der Kühlung nicht mehr erfaßt, da die Durchlaufzeit von Zone 1 bis Zone 13 12 min beträgt. Durch das vorgeschlagene Verfahren erhält jede Zone im Mittel die gleich Heißhaltezeit bei der Pasteurisierungstemperatur $T_P$.

Die **Staulänge i = 8 min** soll das schrittweise Verfahren weiter verdeutlichen. Die Kühlung beginnt zunächst wieder nach einer Schrittzeit von einer Minute in der Zone n = 13. Das Produkt wird in diesem Bereich auf die Abkühltemperatur $T_K$ abgekühlt, bei der keine PE-Zunahme mehr oder nur eine geringe, innerhalb der geforderten Toleranz zulässige erfolgt. Die Länge des Abkühlprozesses hängt von der zulässigen Kaltwassertemperatur und der zu fordernden PE-Toleranz ab. In jedem Falle wird die Kühlung nach einer weiteren Schrittzeit von einer Minute auf die Zone 12 umgeschaltet. Der Kühlungseingriff wandert bei einer Stauzeit i = 8 min bis in die Zone 6 vor, ($t_{KZ}$ = 8 min), wobei die Dauer der Kühlung nach Stauauflösung noch $t_{KD}$ = 5 min beträgt. Die Zonen 1 bis 5 werden während der gesamten vorstehend besprochenen Prozedur weiterhin auf der Pasteurisierungstemperatur $T_P$ gehalten.

Bei einer **Staulänge von 12 min** hat der Kühlungseingriff seine Endlage in Zone 2 erreicht, die Zuschaltung der Kühlung in dieser Zone erfolgt nach Staubeginn mit einer Zeit $t_{KZ}$ = 12 min. Die Dauer der Kühlung beträgt nach Stauauflösung in dieser Zone $t_{KD}$ = 1 min.

Dauert der Stau beispielsweise 13 min, dann wandert der Kühlungseingriff nach der vorstehend besprochenen Verfahrensweise bis in die Zone 1 vor. Die Tabelle weist eine Dauer der Kühlung nach Stauauflösung von $t_{KD}$ = 0 min auf. Dies bedeutet, daß das Produkt durch den Kühlungseingriff lediglich auf die Abkühltemperatur $T_K$ abzukühlen ist.

Sobald der Kühlungseingriff in seiner Endposition nach Ablauf der Einwirkungsdauer $t_{KD}$ beendet ist, wird in den abgekühlten Bereichen die Heißhaltung mit der Durchlaufgeschwindigkeit v wieder zugeschaltet.

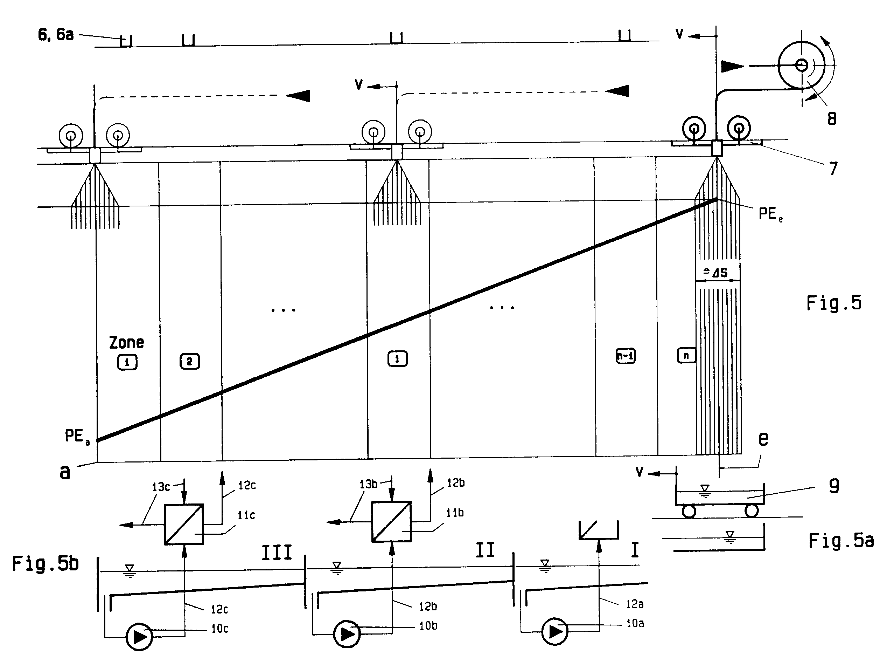

Je kleiner die geforderte PE-Toleranz $\Delta PE_{Tol}$ ist, um so größer wird gemäß Gleichung (4) die Anzahl der Teilzonen n. Im Grenzübergang führt dieses zu einer kontinuierlichen Fortschrittsbewegung des Kühlungseingriff, wobei seine Einwirkungsbreite $\Delta S$ nur noch von den spezifischen Abkühlbedingungen des abzukühlenden Gebindes (4) abhängt. Die Verhältnisse sind schematisch in Figur 5 dargestellt. Ein Sprühsystem 7 ist verfahrbar innerhalb der Pasteurisierungszone P angeordnet. Es wird z.B. über ein flexibles System zur Kaltwasser-Zuführung 8, bei der vorgestellten Lösung ist dies eine Schlauchtrommel, versorgt. Mit 6 und 6a sind fest angeordnete Sprührohre bzw. schwenkbare Düsensysteme für die Heißhaltung bezeichnet. Mit Eintritt des Staus wird der Kühlungseingriff sofort zugeschaltet; er bewegt sich mit einer Geschwindigkeit, die dem Betrag der Durchlaufgeschwindigkeit v entspricht. Die Heißhaltung wird, mit dem Kühlungseingriff fortschreitend, abgeschaltet, wobei die Endlage des Kühlungseingriff wiederum durch die Stauzeit $t_S$ determiniert ist. Die Einwirkungsdauer $t_{KD}$ des Kühlungseingriffs bestimmt sich bei der kontinuierlichen Betriebsweise nach Gleichung (5):

$$t_{KD} = t_P\text{-}t_S; \text{ für } t_S{\leq}t_P \qquad (5)$$

Es versteht sich, daß das verfahrbare Sprühsystem 7 auch schrittweise vorwärts bewegt werden kann, wobei dann die Einwirkungsbreite $\Delta S$ des Kühlungseingriffs der durch die Schrittzeit $\Delta t$ und die Durchlaufgeschwindigkeit v festgelegten jeweiligen Schrittweite v$\Delta t$ entsprechen muß. Falls die Heißhaltung nur abschnittsweise geschaltet werden kann, muß bei der kontinuierlichen Betriebsweise des verfahrbaren Sprühsystems 7 dafür Sorge getragen werden, daß sich die Warmwasser- und Kaltwasserbereiche nicht unnötigerweise überschneiden.

Figur 5a zeigt ein Auffangsystem 9, welches synchron zum Fortschritt des Kühlungseingriffs unter diesem im Bereich unterhalb der Behältnisse 4 längs der Pasteurisierungszone verfahrbar ist. Durch diese Maßnahme lassen sich die mit der Erzeugung des Kühlungseingriffs anfallenden Kaltwassermengen von den im Bereich der Heißhaltung anfallenden Wassermengen getrennt erfassen.

Figur 5b zeigt eine apparativ einfachere Anordnung zur getrennten Erfassung von Kaltwasser- und Warmwassermengen. Der Pasteurisierungszone P sind mehrere voneinander getrennte Auffangzonen I, II, III zugeordnet, aus denen jeweils über eine Umwälzpumpe 10a bzw. 10b bzw. 10c das gesammelte Spritzwasser auf dem Weg über einen Wärmetauscher 11a bzw. 11b bzw. 11c den zugeordneten Spritzrohren 6 bzw. schwenkbaren Düsensystemen 6a im Kreislauf über zugeordnete Leitungen 12a bzw. 12b bzw. 12c zugeführt wird. Die Leitungen für den Kreislauf des Heizmediums sind mit 13a bzw. 13b bzw. 13c gekennzeichnet.

Ausgehend von der Anordnung gemäß Figur 5b ist im Sinne eines weiter verbesserten ökonomischen Umganges mit Energie vorgesehen, daß aus den den Auffangzonen I, II, III zugeordneten Kreislaufbereichen die jeweils zur Heißhaltung bestimmte Wassermenge über die betreffende umschaltbare Umwälzpumpe 10a bzw. 10b bzw. 10c herausgefördert und in einen nicht näher dargestellten Vorratstank, der die Wassermengen aller Bereiche zusammen aufnehmen kann, überführt wird.

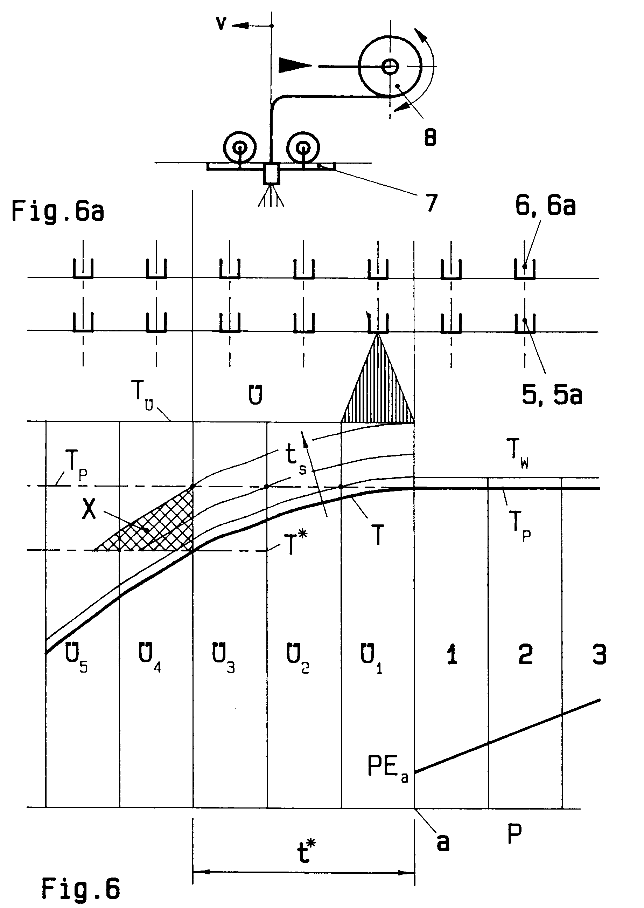

In der Beschreibung zu Figur 3a wurde bereits angedeutet, daß unter Umständen PE-erhöhende Temperaturbereiche oberhalb einer Grenztemperatur T* innerhalb der Überhitzungszone Ü vorliegen können und zu berücksichtigen sind. Dieser Sachverhalt soll an Hand der Figur 6 näher untersucht werden. Im rechten Teil der schematischen Darstellung ist die Pasteurisierungszone P mit den Zonen 1, 2 und 3 zu erkennen. Im Anschluß an die Zone 1 schließt sich linksseitig die Überhitzungszone mit der Überhitzungstemperatur $T_Ü$ an, welche um einen bestimmten Betrag über der Wassertemperatur $T_W$ der Pasteurisierungszone P liegt. Mit T ist der Temperaturverlauf des Produktes beim planmäßigen Durchlauf durch die Pasteurisierungsanlage bezeichnet. Die Gerade T* markiert die Grenztemperatur, oberhalb derer ein PE-erhöhender Temperaturbereich vorliegen soll. Aus dem Schnittpunkt der Grenztemperatur T* mit der Produkttemperatur T ergibt sich die Durchlaufzeit t* für die PE-erhöhenden Temperaturbereiche. Diese sind in der Überhitzungszone mit $Ü_1$, $Ü_2$ und $Ü_3$ gekennzeichnet. Außerhalb des PE-erhöhenden Temperaturbereiches befinden sich die Zonen $Ü_4$ und $Ü_5$.

Bei Eintritt eines Staus werden sich nun die Zonen $Ü_1$ bis $Ü_5$, gemäß den eingezeichneten Temperaturverläufen $T(t_S)$, unter der Einwirkung der Überhitzungstemperatur $T_Ü$ gegenüber der stationären Temperaturverteilung T bei ungestörtem Durchlaufbetrieb aufheizen (Kurvenschar in Abhängigkeit von der Staulänge $t_S$). Erfindungsgemäß soll nun nach einem ersten Verfahren in der Überhitzungszone bei Erreichen der Pasteurisierungstemperatur $T_P$ die Überhitzung in den jeweiligen Bereichen, beginnend am Anfang der Pasteurisierungszone $Ü_1$ und in die Überhitzungszone hinein fortschreitend (von $Ü_1$ über $Ü_2$ bis $Ü_3$), abgeschaltet werden. Diese Zonen verweilen nun bei der Pasteurisierungstemperatur $T_P$ und erfahren somit über die Stauzeit $t_S$ eine Zunahme der PE. Nunmehr sind zwei Fälle zu unterscheiden, nämlich der Fall, daß die Stauzeit $t_S$ gleich oder kleiner als die Pasteurisierungszeit $t_P$ ist, oder der andere Fall, daß die Staulänge $t_S$ größer als die Pasteurisierungszeit $t_P$ ist. Im letztgenannten Falle wird das erfindungsgemäße Verfahren sinngemäß auch auf die Überhitzungszone angewendet, wobei die für die Erhöhung der PE-relevanten Bereiche $Ü_1$, $Ü_2$ und $Ü_3$ durch den aus der Pasteurisierungszone P in die Überhitzungszone Ü fortschreitenden Kühlungseingriff abgekühlt werden. Die Zuschaltung der Überhitzungszonen erfolgt sinngemäß zur Verfahrensweise bei der Zuschaltung der Heißhaltung in der Pasteurisierungszone, und zwar um eine Zeitspanne nach Auflösung des Staus, die sich aus der um die Stauzeit $t_S$ verminderten Durchlaufzeit durch die gesamte Überhitzungszone ergibt.

Im erstgenannten Fall ($t_S \leq t_P$) werden die PE-erhöhenden Bereiche der Überhitzungszone nach Eintritt in den sich in der Pasteurisierungszone P in seiner Endlage befindenden Kühlungseingriff dort abgekühlt, wobei nach Auflösen des Staus die Überhitzung mit der Durchlaufgeschwindigkeit in den Zonen $Ü_3$ bis $Ü_1$, wie vorstehend bereits dargestellt, wieder zugeschaltet wird.

Der in den Bereichen $Ü_4$ und $Ü_5$ mit X gekennzeichnete Bereich soll verdeutlichen, daß die im Falle eines Staus hier stattfindende Temperaturerhöhung über die Grenztemperatur T* hinaus eine PE-Zunahme bewirkt, die nur dann zu vernachlässigen ist, wenn sie innerhalb der zulässigen PE-Toleranz liegt. Weiterhin ist erkennbar, daß es sich bei der Begrenzung des PE-erhöhenden Bereichs um eine gleitende Grenze handelt, die um so mehr in Richtung des Anfanges der Überhitzungszone Ü vorrückt, je länger der Stau andauert.

Das vorstehend beschriebene Verfahren erfaßt alle Teilbereiche der Überhitzungszone und macht keinerlei Unterschiede zwischen PE-erhöhenden Bereichen und solchen, die zur PE-Zunahme keinen Beitrag leisten. Bei genügend langer Stauzeit $t_S$ werden dabei alle Teilbereiche der Überhitzungszone auf Pasteurisierungstemperatur $T_P$ erhitzt werden, so daß die gesamte Zone zur Pasteurisierungszone wird.

Ein zweites mit der Behandlung des Produktes in der Überhitzungszone befaßtes Verfahren sieht demgegenüber vor, daß die Überhitzung in Bereichen unterhalb einer Grenztemperatur T*, die keine bzw. eine geringe tolerierbare Aufnahme von Pasteurisierungseinheiten im Produkt bewirkt, sofort mit Eintritt des Staus abgeschaltet wird. Durch diese Maßnahme tritt keine im Zusammenhang mit dem Bereich X erörterte PE-Zunahme mehr ein. Der heißgehaltene Bereich der Überhitzungszone, im Ausführungsbeispiel sind dies die Bereiche $Ü_1$ bis $Ü_3$, wird zunächst in gleicher Weise behandelt, wie dies beim erstgenannten Verfahren beschrieben wurde. Allerdings wird nach Auflösung des Staus die Überhitzung mit der Durchlaufgeschwindigkeit wieder unverzüglich zugeschaltet.

In Figur 6a wird verdeutlicht, daß neben den fest angeordneten Sprührohren 6 bzw. den schwenkbaren Düsensystemen 6a für die Überhitzung entweder fest angeordnete Sprührohre 5 oder schwenkbare Düsensysteme 5a für die Ausbringung von Kaltwasser, die längs der Zone getrennt voneinander zu- und abschaltbar sein müssen, vorzusehen sind, oder aber es ist das verfahrbare Sprühsystem 7 zur Anwendung zu bringen.

## Patentansprüche

1. Verfahren zur Erzielung gleichbleibender Produktqualität und -sicherheit in Pasteurisierungsanlagen bei Eintritt eines Staus, wobei die Pasteurisierungsanlage im Durchlauf betrieben wird und das Produkt dabei verschiedene Temperaturzonen durchläuft, von denen eine Überhitzungs- und eine Pasteurisierungszone wenigstens teilweise in regelbare Teilzonen unterteilt ist, **dadurch gekennzeichnet**, daß die Pasteurisierungsanlage mit einer den planmäßigen Pasteurisierungserfordernissen angepaßten konstanten Durchlaufgeschwindigkeit betrieben wird, daß mit Eintritt des Staus ein Kühlungseingriff erfolgt, welcher in seinem Einwirkungsbereich den betreffenden Bereich der Pasteurisierungszone auf eine Temperatur abkühlt, die keine bzw. eine geringe tolerierbare Zunahme der dem Produkt in diesem Bereich bis zu diesem Zeitpunkt verabreichten Pasteurisierungseinheiten (PE) erlaubt, daß der Kühlungseingriff am Ende der Pasteurisierungszone beginnt und zu ihrem Anfang mit einer Geschwindigkeit fortschreitet, die dem Betrag der Durchlaufgeschwindigkeit entspricht, daß, mit den Kühlungseingriff fortschreitend, die Heißhaltung abgeschaltet wird, daß sich nach Ablauf der Stauzeit $t_S$ in der durch diese determinierten Endlage des Kühlungseingriffs dessen Einwirkungsdauer $t_{KD}$ jeweils aus der Differenz zwischen der Pasteurisierungszeit $t_P$ und der Stauzeit $t_S$ bestimmt ($t_{KD} = t_P - t_S$ für $t_S \leqq t_P$), und daß anschließend in den abgekühlten Bereichen die Heißhaltung mit der Durchlaufgeschwindigkeit wieder zugeschaltet wird.

2. Verfahren nach Anspruch 1, **dadurch gekennzeichnet**, daß in Abhängigkeit von einer vorgegebenen Pasteurisierungstoleranz (PE-Toleranz) $\Delta PE_{Tol}$ und der in der Pasteurisierungszone nach der Pasteurisierungszeit $t_P$ gewünschten Änderung der Pasteurisierungseinheiten (($PE_e - PE_a)/t_P$) eine Schrittzeit $\Delta t$ ($\Delta t = t_P \Delta PE_{Tol}/(PE_e - PE_a)$) ermittelt wird, daß die Zuschaltung des Kühlungseingriffs um die Schrittzeit $\Delta t$ nach Staubeginn erfolgt, wobei sich die Einwirkungsbreite $\Delta S$ des Kühlungseingriffs, in Durchlaufrichtung gesehen, aus der im Verhältnis der Schrittzeit $\Delta t$ zur Pasteurisierungszeit $t_P$ geteilten Länge der Pasteurisierungszone L ($\Delta S = L \Delta t/t_p$) ergibt, daß der Kühlungseingriff in fortschreitender Abfolge der Schrittzeit $\Delta t$ und nach Maßgabe der in ihr gequantelten Stauzeit $t_S$ wandert, und daß sich seine Einwirkungsdauer $t_{KD}$ gleichfalls schrittweise reduziert.

3. Verfahren nach Anspruch 1 oder 2, **dadurch gekennzeichnet**, daß bei Erreichen der Pasteurisierungstemperatur $T_P$ in einer der Pasteurisierungszone vorgeschalteten Überhitzungszone die Überhitzung in den jeweiligen Bereichen, beginnend am Anfang der Pasteurisierungszone und in die Überhitzungszone hinein fortschreitend, abgeschaltet wird, daß diese für die Erhöhung der Pasteurisierungseinheiten (PE) relevanten Bereiche entweder, falls die Stauzeit $t_S \leqq t_P$ ist, nach Eintritt in den sich in der Pasteurisierungszone in seiner Endlage befindenden Kühlungseingriff dort abgekühlt werden oder, falls die Stauzeit $t_S > t_P$ ist, durch den aus der Pasteurisierungszone in die Überhitzungszone fortschreitenden Kühlungseingriff abgekühlt und sinngemäß zur Verfahrensweise innerhalb der Pasteurisierungszone weiterbehandelt werden, und daß die Überhitzung, im Falle $t_S \leqq t_p$, um eine Zeitspanne nach Auflösung des Staus mit der Durchlaufgeschwindigkeit wieder zugeschaltet wird, wobei sich die Zeitspanne aus der um die Stauzeit $t_S$ verminderten Durchlaufzeit durch die gesamte Überhitzungszone ergibt.

4. Verfahren nach Anspruch 1 oder 2, **dadurch gekennzeichnet**, daß die Überhitzung in Bereichen der Überhitzungszone unterhalb einer nicht Grenztemperatur $T^*$, die keine bzw. eine geringe tolerierbare Aufnahme von Pasteurisierungseinheiten (PE) des Produktes bewirkt, sofort mit Eintritt des Staus abgeschaltet wird, daß die Überhitzung in den übrigen Bereichen bei Erreichen der Pasteurisierungstemperatur $T_p$, beginnend am Anfang der Pasteurisierungszone und in die Überhitzungszone hinein fortschreitend, abgeschaltet wird, daß diese für die Erhöhung der Pasteurisierungseinheiten relevanten Bereiche entweder, falls die Staulänge $t_S \leqq t_p$ ist, nach Eintritt in den sich in der Pasteurisierungszone in seiner Endlage befindenden Kühlungseingriff dort abgekühlt werden oder, falls die Stauzeit $t_S > t_p$ ist. durch den aus der Pasteurisierungszone in die Überhitzungszone fortschreitenden Kühlungseingriff abgekühlt und sinngemäß zur Verfahrensweise innerhalb der Pasteurisierungszone weiterbehandelt werden, und daß die Überhitzung, im Falle $t_S \leqq t_p$, nach Auflösung des Staus mit der Durchlaufgeschwindigkeit wieder zugeschaltet wird.

5. Verfahren nach einem der Ansprüche 1 bis 4, **dadurch gekennzeichnet**, daß die mit dem Kühlungseingriff anfallenden Kaltwassermengen von den in den Bereichen der Heißhaltung anfallenden Warmwassermengen getrennt erfaßt werden.

6. Verfahren nach Anspruch 5, **dadurch gekennzeichnet**, daß die zur Heißhaltung bestimmten Wassermengen bereichsweise erfaßt und im Kreislauf geführt werden, daß die Heißhaltung Bereich für Bereich, in dem der Kühlungseingriff erfolgt, abgeschaltet und die in Frage kommende Wassermenge aus dem jeweiligen Bereich herausgenommen und gestapelt wird.

7. Anordnung zur Ausführung des Verfahrens nach einem der Ansprüche 1 bis 6, wobei in der Pasteurisierungszone und in der Überhitzungszone zur Heißhaltung bzw. Überhitzung feste Sprührohre oder schwenkbare Düsensysteme oder Berieselungseinrichtungen vorgesehen sind, die bereichsweise längs der Zonen zu- und abschaltbar sind, **dadurch gekennzeichnet**, daß ein Sprühsystem (7) vorgesehen ist, welches innerhalb der Pasteurisierungszone (P) und der Überhitzungszone (Ü) kontinuierlich bzw. schrittweise verfahrbar ist, wobei bei der schrittweisen Fortbewegung seine Einwirkungsbreite $\Delta S$, in Bewegungsrichtung gesehen, der durch die Schrittzeit $\Delta t$ und die Durchlaufgeschwindigkeit v festgelegten Schrittweite $v\Delta t$ entspricht.

**8.** Anordnung zur Ausführung des Verfahrens nach einem der Ansprüche 1 bis 6, wobei in der Pasteurisierungszone und in der Überhitzungszone zur Heißhaltung bzw. Überhitzung feste Sprührohre oder schwenkbare Düsensysteme oder Berieselungseinrichtungen vorgesehen sind, die bereichsweise längs der Zonen zu- und abschaltbar sind, **dadurch gekennzeichnet**, daß zur Zuführung von Kaltwasser fest angeordnete Sprührohre (5) oder schwenkbare Düsensysteme (5a) vorgesehen sind, die längs der Zonen getrennt voneinander derart zu- und abschaltbar sind, daß die Fortbewegung des Kühlungseingriffs quasikontinuierlich bzw. abschnittsweise, lückenlos infolge der aus der Schrittzeit Δt resultierenden Einwirkungsbreite ΔS, in fortschreitender Abfolge und nach Maßgabe der Schrittzeit Δt erfolgt.

**9.** Anordnung nach einem der Ansprüche 7 oder 8, **dadurch gekennzeichnet**, daß der Pasteurisierungszone (P) mehrere voneinander getrennte Auffangzonen (I, II, III) zugeordnet sind, aus denen jeweils über eine Umwälzpumpe (10a bzw. 10b bzw. 10c) das gesammelte Spritzwasser auf dem Weg über einen Wärmetauscher (11a bzw. 11b bzw. 11c) den zugeordneten Spritzrohren (6) bzw. den schwenkbaren Düsensystemen (6a) im Kreislauf zugeführt wird.

**10.** Anordnung nach einem der Ansprüche 7 oder 8, **dadurch gekennzeichnet**, daß der Pasteurisierungszone (P) mehrere voneinander getrennte Kreislaufbereiche (I, II, III) für die zur Heißhaltung bestimmten Wassermengen zugeordnet sind, aus denen jeweils über eine auf einen Vorratstank umschaltbare Umwälzpumpe (10a bzw. 10b bzw. 10c) die betreffende Wassermenge herausgefördert und in den Vorratstank, der die Wassermengen aller Bereiche zusammen aufnehmen kann, überführt wird.

**11.** Anordnung nach einem der Ansprüche 7 oder 8**, dadurch gekennzeichnet**, daß ein Auffangsystem (9) vorgesehen ist, welches synchron zum Fortschritt des Kühlungseingriffs unter diesem im Bereich unterhalb der Behältnisse (4) längs der Pasteurisierungszone (P) verfahrbar ist.

**Claims**

**1.** Process for obtaining constant product quality and safety in pasteurization plants in the event of a stoppage, with the pasteurization plant being operated continuously and the product running through different temperature zones, of which an overheating and a pasteurization zone is divided at least partially into adjustable partial zones, **characterized in that** the pasteurization plant is operated at a constant running speed adapted to the scheduled pasteurization requirements, that in the event of a stoppage a cooling takes place which in its area of influence cools the affected region of the pasteurizing zone to a temperature which permits no increase or only a slight permissible increase in the pasteurization units (PE) introduced into the product in this region up to this point in time, that the cooling starts at the end of the pasteurization zone and proceeds to its beginning at a speed corresponding to the running speed, that with proceeding of the cooling, the heating is shut off, that after the stoppage time $t_S$ in the final position of the cooling determined by it, its time of influence $t_{KD}$ is determined respectively from the difference between the pasteurization time $t_p$ and the stoppage time $t_S$ ($t_{KD} = t_p-t_s$ if $t_s \leq t_p$), and that afterwards the warming is switched on again at running speed in the cooled regions.

**2.** Process according to claim 1, **characterized in that**, depending on a given pasteurizing tolerance (PE-tolerance) $\Delta PE_{Tol}$ and the change of pasteurization units desired in the pasteurization zone after the pasteurization time $t_p$ (($PE_e$ - $PE_a$)/$t_p$), a time increment $\Delta t$ ($\Delta t = tp\Delta PE_{Tol}/(PE_e - PE_a)$) is determined, that the switching on of the cooling takes place at the time increment $\Delta t$ after beginning of the stoppage, with the influence width $\Delta S$ of the cooling, seen in running direction, results from the length of the pasteurization zone L ($\Delta S = L\Delta t/t_p$) divided at the ratio of time increment $\Delta t$ to pasteurization time $t_p$, that the cooling moves with the proceeding of time increment $\Delta t$ and in accordance with the stoppage time $t_S$ quantized in it, and that also its influence time $t_{KD}$ decreases gradually.

**3.** Process according to Claim 1 or 2, **characterized in that** the overheating is switched off in the respective regions when the pasteurization temperature $t_P$ in an overheating zone preceding the pasteurization zone is reached, starting at the beginning of the pasteurization zone and proceeding into the overheating zone, that these regions relevant for elevation of pasteurization units (PE) are either cooled after entry into the cooling in its final position in the pasteurization zone, if the stoppage time is $t_s \leq t_p$, or are cooled by the cooling proceeding from the pasteurization zone into the overheating zone, if the stoppage time is $t_s > t_p$, and treated subsequently within the pasteurization zone equivalently to the process, and that the overheating is switched on again for a time interval after clearing of the stoppage at running speed, if $t_s \leq t_p$, with the time interval resulting from the running time through the whole overheating zone decreased by the stoppage time $t_s$.

4. Process according to Claim 1 or 2, **characterized in that** the overheating in the regions of the overheating zone below a limit temperature T* that causes no or only a slight permissible increase in the pasteurization units (PE) of the product, is switched off immediately in the event of a stoppage, that the overheating in the other regions is switched off when the pasteurization temperature $T_p$ is reached, starting at the beginning of the pasteurization zone and proceeding into the overheating zone, that these regions relevant for the elevation of pasteurization units are either cooled after entry into the cooling in its final position in the pasteurization zone, if the stoppage time is $t_s \leq t_p$, or are cooled by the cooling proceeding from the pasteurization zone into the overheating zone, and treated subsequently within the pasteurization zone equivalently to the process, and that the overheating is switched on again at running speed after clearing of the stoppage, if $t_s \leq t_p$.

5. Process according to one of Claims 1 to 4, **characterized in that** the cold water produced by the cooling is registrated independently of the hot water produced in the heating regions.

6. Process according to Claim 5, **characterized in that** the water destinated for heating is registrated by regions and conducted in a closed cycle, that the heating is switched off region after region in which the cooling takes place, and that the possible water quantity is taken from the respective region and stored.

7. Arrangement for execution of the process according to one of Claims 1 to 6, with fixed spray tubes or pivoting nozzle systems being provided in the pasteurization zone and in the overheating zone for heating and overheating that can be switched on and off by regions along the zones, **characterized in that** a spray system (7) is provided, which is conveyable continually or gradually within the pasteurization zone (P) and the overheating zone (Ü), with its influence width $\Delta S$, seen in running direction, corresponding to the width increment $v\Delta t$ determined by the time increment $\Delta t$ and the running speed v.

8. Arrangement for execution of the process according to one of Claims 1 to 6, with fixed spray tubes or pivoting nozzle systems being provided in the pasteurization zone and in the overheating zone for heating and overheating that can be switched on and off by region along the zones, **characterized in that** fixed spray tubes (5) or pivoting nozzle systems (5a) for supply of cold water are provided that can be switched on and off independently of each other along the zones, in a way that the proceeding of the cooling is almost continual or by section, without interruption due to the influence width $\Delta S$ resulting from the time increment $\Delta t$, in proceeding sequence and in accordance with the time increment $\Delta t$.

9. Arrangement according to Claim 7 or 8, **characterized in that** several collecting zones (I, II, III) are assigned to the pasteurization zone (P), from which the collected spray water is supplied over a circulating pump (10a, 10b and 10c respectively) on its way over a heat exchanger (11a, 11b and 11c respectively) to the assigned spray tubes (6) or the pivoting nozzle system (6a) in a closed cycle.

10. Arrangement according to Claim 7 or 8, **characterized in that** several cycle regions (I, II, III) seperated from each other for the water quantities destinated for heating are assigned to the pasteurization zone (P), from which the relevant water quantity is conveyed over a circulating pump (10a, 10b or 10c respectively) commutable to a storage tank and conducted to the storage tank that can hold the water quantities of all regions together.

11. Arrangement according to Claim 7 or 8, **characterized in that** a collecting system (9) is provided that is conveyable under the cooling, synchronously to its proceeding, underneath the containers (4) along the pasteurization zone (P).

**Revendications**

1. Procédé pour obtenir un produit d'une qualité et d'une sécurité constantes dans des installations de pasteurisation lors de l'apparition d'une retenue, l'installation de pasteurisation fonctionnant en continu et le produit traversant ainsi différentes zones de températures, parmi lesquelles une zone de surchauffe et de pasteurisation qui est divisée au moins partiellement en sous-zones réglables,

caractérisé en ce que l'installation de pasteurisation fonctionne à une vitesse d'écoulement constante adaptée aux exigences de pasteurisation prévues,

que, l'apparition de la retenue a pour conséquence une étape de refroidissement, qui refroidit - dans sa plage d'action - la partie concernée de la zone de pasteurisation à une température qui ne permet pas ou permet seulement une faible augmentation tolérable, du nombre d'unités de pasteurisation (PE) fournies jusqu'ici au produit,

que l'étape de refroidissement commence à la fin de la zone de pasteurisation et progresse au départ à une vitesse correspondant à la vitesse d'écoulement,

que, avec la progression de l'étape de refroidissement, le maitien en chauffe est arrêté,

qu'après l'écoulement du temps de retenue $t_s$, dans la position finale de l'étape de refroidissement déterminée par celui-ci, son temps d'action $t_{KD}$ est calculé chaque fois à partir de la différence entre le temps de pasteurisation $t_p$ et le temps de retenue $t_s$ ($t_{KD} = t_p - t_s$ pour $t_s \leq t_p$),

et qu'ensuite, dans les plages refroidies, le maintien de chauffe est de nouveau activé à la vitesse d'écoulement.

2. Procédé selon la revendication 1, caractérisé en ce qu'un temps d'étape $\Delta t$ ($\Delta t = t_p \Delta PE_{tol}/(PE_e - PE_a)$) est calculé en fonction d'une tolérance de pasteurisation prédéterminée (tolérance PE)$\Delta PE_{tol}$ de la modification souhaitée des unités de pasteurisation (($PE_e - PE_a$)/$t_p$) dans la zone de pasteurisation après le temps de pasteurisation $t_p$,

que la mise en route de l'étape de refroidissement s'effectue au temps d'étape $\Delta t$ après le début de la retenue, le domaine d'action $\Delta s$ de l'étape de refroidissement, vu dans le sens de l'écoulement, étant obtenue à partir de la longueur de la zone de pasteurisation L ($\Delta S = L \Delta t/t_p$) divisée suivant le rapport du temps d'étape $\Delta t$ au temps de pasteurisation $t_p$,

que l'étape de refroidissement progresse avec l'écoulement du temps d'étape $\Delta t$ et selon le temps de retenue $t_S$ qui y est quantifié,

et que sa durée d'action $t_{KD}$ est également réduite progressivement.

3. Procédé selon la revendication 1 ou 2, caractérisé en ce que, lorsque la température de pasteurisation $T_p$ atteint dans une zone de surchauffe pré-établie dans la zone de pasteurisation, la surchauffe est arrêtée dans chacune des différentes plages commençant au début de la zone de pasteurisation et continuant dans la zone de surchauffe,

que ces plages, importantes pour l'augmentation des unités de pasteurisation (PE) sont, soit, si le temps de retenue est $t_S \leq t_p$, refroidies après l'entrée dans l'étape de refroidissement qui se trouve dans sa position finale dans la zone de pasteurisation, soit , si le temps de retenue est $t_S > t_p$, refroidies par l'étape de refroidissement quittant la zone de pasteurisation pour entrer dans la zone de surchauffe, et sont ensuite traitées dans la zone de pasteurisation conformément au procédé, et

que la surchauffe, si $t_S \leq t_p$, est remise en route après un intervalle suivant la fin de la retenue, à la vitesse d'écoulement, l'intervalle étant obtenue à partir du temps d'écoulement diminué du temps de retenue $t_S$ àtravers l'ensemble de la zone de surchauffe.

4. Procédé selon la revendication 1 ou 2, caractérisé en ce que la surchauffe est immédiatement arrêtée, avec l'apparition de la retenue, dans les plages de la zone de surchauffe en-dessous d'une température non limite T*, qui ne provoque pas ou provoque seulement une faible absorption tolérable d'unités de pasteurisation (PE) du produit,

que la surchauffe est arrêtée dans les plages restantes lorsque la température de pasteurisation $T_p$ est atteinte, en commençant au début de la zone de pasteurisation et continuant dans la zone de surchauffe,

que ces plages, importantes pour l'augmentation des unités de pasteurisation, sont soit, si la longueur de la retenue est $t_S \leq t_p$, refroidies après l'entrée dans la zone de pasteurisation se trouvant dans sa position finale dans la zone de pasteurisation, soit, si le temps de retenue est $t_s > t_p$, refroidies par l'étape de refroidissement quittant la zone de pasteurisation pour entrer dans la zone de surchauffe et sont ensuite traitées conformément au procédé à l'intérieur de la zone de pasteurisation,

et que la surchauffe, si $t_S \leq t_p$, est remise en marche après la fin de la retenue, à la vitesse d'écoulement.

5. Procédé selon l'une des revendications 1 à 4, caractérisé en ce que les quantités d'eau froide provenant de l'étape de refroidissement sont recueillies de manière séparée des quantités d'eau chaude provenant des plages de conservation de la chaleur.

6. Procédé selon la revendication 5, caractérisé en ce que les quantités d'eau destinées au maintien en chauffe sont recueillies par plages et circulent en circuit fermé, que le maintien en chauffe est arrêté pour chaque plage dans laquelle l'étape de refroidissement a lieu, et la quantité d'eau en question est retirée de la plage correspondante et stockée.

7. Disposition pour réaliser le procédé selon l'une des revendications 1 à 6, dans lequel des tuyaux de pulvérisation fixes, ou des systèmes de buses pivotantes, ou des dispositifs d'irrigation sont prévus dans la zone de pasteurisation et dans la zone de surchauffe pour le maintien à température élevée ou la surchauffe, qui peuvent être activés ou désactivés par plages le long des zones,
   caractérisée en ce qu'un système de pulvérisation (7) est prévu, qui peut être mis en action de manière continue ou par étapes dans la zone de pasteurisation (P) et la zone de surchauffe (U), son domaine d'action $\Delta S$ correspondant, lors du déplacement progressif, au pas de progression $v\Delta t$ défini par le temps d'étape $\Delta t$ et la vitesse d'écoulement v, vu dans le sens de déplacement.

8. Disposition pour réaliser le procédé selon l'une des revendications 1 à 6, dans lequel des tuyaux de pulvérisation fixes ou des systèmes de buses pivotantes ou des dispositifs d'irrigation sont prévus dans la zone de pasteurisation et dans la zone de surchauffe pour le maintien en chauffe et la surchauffe, qui peuvent être activés et désactivés par plage le long des zones,
   caractérisée en ce qu'il est prévu, pour amener de l'eau froide, des tuyaux de pulvérisation fixes (5) ou des systèmes de buses pivotantes (5a), qui peuvent être activés et désactivés le long des zones de manière séparée les uns des autres,
   que le déplacement de l'étape de refroidissement s'effectue de manière quasiment continue ou par secteur sans lacune en raison du domaine d'action $\Delta s$ résultant du temps d'étape $\Delta t$, progressivement et selon le temps d'étape.

9. Disposition selon l'une des revendications 7 ou 8, caractérisée en ce que plusieurs zones de collecte séparées les unes des autres (I, II, III) sont affectées à la zone de pasteurisation (P), à partir desquelles l'eau injectée et collectée est amenée en circuit fermé aux tuyaux d'injection (6) ou aux systèmes de buses pivotantes (6a) associés, à l'aide d'une pompe de circulation (10a ou 10b ou 10c), à travers un échangeur de chaleur (11a ou 11b ou 11c).

10. Disposition selon l'une des revendications 7 ou 8, caractérisée en ce que plusieurs plages de circulation (I, II, III) pour les quantités d'eau destinées au maintien en chauffe, séparées les unes des autres, sont affectées à la zone de pasteurisation (P), à partir desquelles la quantité d'eau correspondante est extraite au moyen d'une pompe de circulation (10a ou 10b ou 10c) pouvant être commutée sur un réservoir principal, et est transportée dans le réservoir principal, qui peut recueillir les quantités d'eau de toutes les plages.

11. Disposition selon l'une des revendications 7 ou 8, caractérisée en ce qu'un système de collecte (9) est prévu, qui peut être actionné en même temps que la progression de l'étape de refroidissement dessous, dans la plage située sous les récipients (4) le long de la zone de pasteurisation (P).

Fig.1

Fig.2

Fig.3

Fig.3a

EP 0 523 076 B1

Fig.4

EP 0 523 076 B1

Fig.5

Fig.5a

Fig.5b

19

Fig.6a

Fig.6